(19) **Europäisches Patentamt**

**European Patent Office**

**Office européen des brevets**

(11) **EP 0 991 069 B1**

(12) **EUROPÄISCHE PATENTSCHRIFT**

(45) Veröffentlichungstag und Bekanntmachung des Hinweises auf die Patenterteilung:
**28.03.2001 Patentblatt 2001/13**

(51) Int Cl.$^7$: **G11B 20/10**, H04L 25/49

(21) Anmeldenummer: **98117843.7**

(22) Anmeldetag: **21.09.1998**

(54) **Verfahren und Vorrichtung zum Umkodieren digitaler Informations-Datenwörter und Aufzeichnungsträger mit gemäss diesem Verfahren erzeugter Informationsstruktur**

Method and apparatus for coding digital information data and recording medium with structure of information obtained with that method

Méthode et appareil pour coder des données d'information numériques et support d'enregistrement avec une structure d'information obtenue par cette méthode

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **15.09.1998 EP 98117505**

(43) Veröffentlichungstag der Anmeldung:
**05.04.2000 Patentblatt 2000/14**

(73) Patentinhaber: **Seehausen, Gerhard, Prof. Dr.**
**52076 Aachen (DE)**

(72) Erfinder: **Seehausen, Gerhard, Prof. Dr.**
**52076 Aachen (DE)**

(74) Vertreter: **Klunker . Schmitt-Nilson . Hirsch**
**Winzererstrasse 106**
**80797 München (DE)**

(56) Entgegenhaltungen:
**EP-A- 0 396 346**    **EP-A- 0 691 750**
**DE-A- 3 125 529**    **US-A- 4 539 691**
**US-A- 5 469 162**    **US-A- 5 508 701**
**US-A- 5 627 694**    **US-A- 5 742 243**

- **SEEHAUSEN G.: "influence of pit geometry on read-out signals of optical data disc drives" IEEE INTERNATIONAL PUBLICATION, (LONDON) ELECTRONICS LETTERS, Bd. 28, Nr. 18, August 1992, Seiten 1709-1711, XP002088646**
- **ANONYMOUS: "Charge Constrained Byte Oriented (0,3) Code. December 1976." IBM TECHNICAL DISCLOSURE BULLETIN, Bd. 19, Nr. 7, Dezember 1976, Seiten 2715-2717, XP002088647 New York, US**
- **TANG D T ET AL: "Block codes for a class of constrained noiseless channels" INFORMATION AND CONTROL, DEC. 1970, USA, Bd. 17, Nr. 5, Seiten 436-461, XP002088712 ISSN 0019-9958**

**Beschreibung**

Die Erfindung betrifft ein Verfahren zum Umkodieren digitaler Informations-Datenwörter in Kanaldatenwörter, z.B. durch Anfügen eines Blocks aus einer Menge von Trennbit-Blöcken auf je ein vorausgehendes benachbartes Informations-Datenwort oder durch Abbilden je eines Informations-Datenworts auf eines aus einer Teilmenge von Kanaldatenwörtern, um einen bestimmten Signal-Gleichanteil einzustellen, wozu eine Menge von Kandidaten für Kanaldatenwörter gebildet wird, aus der ein Kanaldatenwort gemäß einem Auswahlkriterium ausgewählt wird; außerdem betrifft die Erfindung einen Aufzeichnungsträger mit gemäß diesem Verfahren erzeugter Informationsstruktur.

Ein solches Verfahren ist aus der DE-C-31 25 529 bekannt. Der Begriff "Kanaldatenwörter" impliziert, daß es sich bei diesen Datenwörtern um gespeicherte und/oder übertragene Datenwörter handelt, also Darenwörter, die von einer Datenwortquelle zu einer Datenwortsenke gelangen.

Als spezielles Beispiel soll im folgenden auf eine Compact-Disc Bezug genommen werden, wobei der Fachmann jedoch sieht, daß das Verfahren ebenso bei der Übertragung von Daten über eine beliebige Übertragungsstrecke Anwendung findet.

Die auf einer Compact-Disc zu speichernden Daten liegen zunächst als Informations-Datenwörter mit jeweils einer Länge von 14 Bits vor. Diese Informations-Datenwörter werden umgesetzt in Kanaldatenwörter, indem den vier Bits weitere drei Bits (sogenannte Trennbits) hinzugefügt werden. Aus Gründen der geforderten Höchstbandbreite und um im "Empfänger", das heißt im Lesegerät oder Abspielgerät für die Compact-Disc das Taktsignal synchron erzeugen können, werden die Trennbits so gewählt, daß nur vorbestimmte Folgen von ausschließlich Nullen oder Einsen vorkommen.

Um das Verständnis der Erfindung zu erleichtern, soll zunächst kurz die Art der Kodierung bei Compact-Discs erläutert werden.

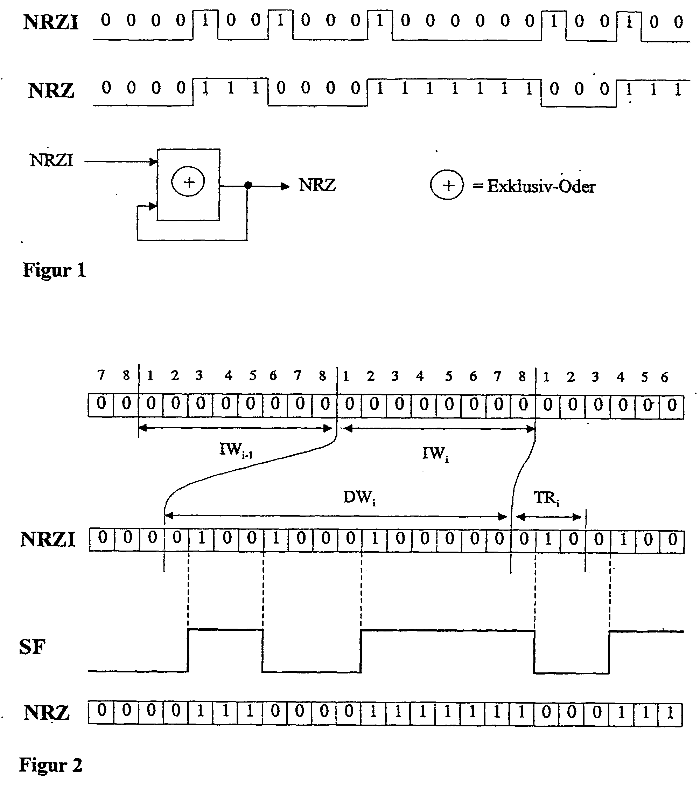

Bei der digitalen Übertragung in optischen (oder auch magnetischen) Aufnahme- bzw. Wiedergabesystemen liegt die zu verarbeitende Information in Form von Datenworten oder Abtastwerten vor, die aus den binären logischen Stellenkoeffizienten (Bit) "0" oder "1" zusammengesetzt sind, wobei zum Beispiel das Bit "1" gemäß des NRZ-Kodes einen optisch (oder magnetisch) aktiven und das Bit "0" einen optisch (oder magnetisch) inaktiven Bereich kennzeichnet. Grundsätzlich wird zwischen der NRZ- und NRZI-Kodierung unterschieden. In Fig. 1 sind die beiden Kodierungsarten an Hand eines Beispiels dargestellt. Die NRZI-Kodierung entsteht aus der NRZ-Kodierung dadurch, daß bei einem Bitwechsel (0-1; 1-0) des NRZ-Signals eine "1" im NRZI-Signal gesetzt wird und bei ausbleibendem Wechsel des NRZ-Signals eine "0" im NRZI-Signal resultiert (NRZ = <u>N</u>on-<u>R</u>eturn to <u>Z</u>ero).

Die Umkodierung kann durch EXKLUSIV-ODER-Verknüpfung gemäß Figur 1 durchgeführt werden.

Nach dem bekannten Verfahren werden - wie erwähnt - die Folgen von Informations-Datenwörter so umkodiert und ergänzt, daß in der NRZI-Kodierung die Bitfolge minimal d und maximal k Bits vom Typ "0" zwischen den Bits vom Typ "1" aufweist. Diese Bedingung wird als d, k-Bedingung bezeichnet. Im speziellen Fall der Compact Disc sind d=2 und k=10. Das bedeutet, daß die NRZ-Datenstruktur auf der Compact Disc sich aus optisch aktiven Bereichen der minimalen Länge 3T und der maximalen Länge 11T respektive aus optisch inaktiven Bereichen der minimalen Länge 3T und der maximalen Länge 11T zusammensetzt. Dabei kennzeichnet T die Länge eines Bittaktes.

Die Informations-Datenwörter haben jeweils eine Länge von 8 Bits und werden in 14 Bits lange Informations-Datenwörter umkodiert und dann durch die Trennbits ergänzt, so daß jedes Kanaldatenwort eine Länge von 17 Bits hat.

Bei dem bekannten Verfahren werden die Trennbits außerdem dazu benutzt, den Gleichstromanteil oder Signal-Gleichanteil auf ein Minimum einzustellen. Der Signal-Gleichanteil ist deshalb von Bedeutung, weil er im Empfänger, das heißt in dem Wiedergabegerät einer Compact-Disc durch schaltungstechnische Maßnahmen ermittelt wird und als Entscheidungsschwelle für die Unterscheidung zwischen Nullen und Einsen benutzt wird.

Das Entstehen des Gleichanteils ist in Fig. 2 erläutert. Die Blöcke der Informationsworte I $W_i$ werden zunächst in die Blöcke der Datenworte D $W_i$ umkodiert und durch geeignete Trennbits T $R_i$ ergänzt. Der so erhaltene NRZI-kodierte Datenstrom wird in der Form des NRZ-Formats auf den Aufzeichnungsträger gebracht, wobei eine "1" einen Übergang am Anfang der betreffenden Bitzelle und eine "0" keinen Übergang markiert. Die mit D $W_i$ und T $R_i$ bezeichnete Bitfolge hat auf dem Aufzeichnungsträger, sofern vereinfachend idealisiertes Verhalten angenommen wird, die mit SF bezeichnete Signalfolge. Wird dem Pulspegel der Folge SF virtuell der Wert +1 und dem Pausenpegel von SF der Wert -1 zugeordnet, so weist die Folge SF einen von Null verschiedenen Gleichanteil auf, wenn die Pulslängen und die Pausenlängen nicht identisch sind. Ein häufig verwendetes Maß für den Gleichanteil ist der digitale Summenwert DSV, der unter der Annahme der obigen Pegelzuordnung gleich dem Integral über die Signalfolge SF ist. Der Gleichanteil oder DSV hat bei der Dekodierung der Signalfolge SF eine entscheidende Bedeutung, da er die Entscheidungsschwelle des Dekodierers festlegt.

Bei dem Verfahren nach der DE-C 31 25 529 besteht die Besonderheit des Umkodier-Verfahrens darin, daß die Auswahl der Trennbits mit der Maßgabe erfolgt, daß ein minimaler Signal-Gleichanteil erhalten wird. Dies führt im Ergebnis dazu, daß der digitale Summenwert DSV sich periodisch über eine geringe Anzahl aufeinanderfolgender Kanaldatenwörter in der Weise ändert, daß innerhalb eines kurzen Intervalls ein mittlerer digitaler Summenwert von "0" und ein entsprechender Signal-Gleichanteil erreicht wird.

Die Minimierung des Gleichanteils soll die Entscheidungsschwelle auf den Mittelwert der auf den Aufzeichnungsträger aufgezeichneten Signalfolge einstellen.

Es hat sich nun gezeigt, daß die der DE-C 31 25 529 beschriebene und beanspruchte Forderung, den minimalen Gleichstromanteil anzustreben, der Zielforderung, nämlich durch geeignete Entscheidungsschwelle möglichst wenig Bitfehler zu erhalten, nicht erfüllen kann.

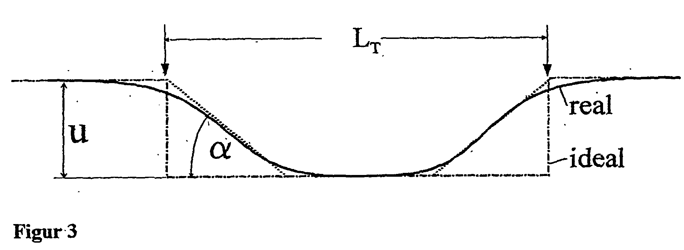

In dem Abspielgerät einer Compact Disc wird in einem Dekodierer die aufgezeichnete geometrische Struktur in Bitfolgen zurückverwandelt. Beispielsweise werden die digitalen Daten bei einer Compäct Disc in Form von Vertiefungen (Pits, optisch inaktiv) derselben Tiefe u und Breite b sowie den dazwischenliegenden Räumen (Lands, optisch aktiv) gespeichert. Die Information wird durch die variierende Länge der Pits und Lands repräsentiert, wobei die Längen die d, k-Bedingung erfüllen müssen. Aufgrund des lasertechnischen Aufzeichnungs- und spritzgußtechnischen Vervielfältigungsverfahrens ist zum Beispiel die Pit-Struktur auf der Compact Disc nicht ideal rechteckförmig, sondern stark abgerundet, wie in Fig. 3 dargestellt ist.

Mit zunehmender Entwicklung der Herstellungstechnologie konnte die Spritzgußzeit für ein Compact-Disc-Substrat auf nahezu 20% des Ausgangswertes gesenkt werden, was allerdings eine zunehmende Verflachung und Verrundung der Pitstruktur zur Folge hatte. Typische Werte der Pitwinkel liegen unter $\alpha=25°$. Um die Auswirkung auf das Leseprinzip möglichst gering zu halten, wird die Verrundung durch eine Verbreiterung der Pits kompensiert. Eine adäquate Verlängerung der Pits ist nicht uneingeschränkt durchführbar, da dadurch die Speicherkapazität herabgesetzt würde. Beim Auslesen der verrundeten Pitstrukturen tritt eine weitere Verfälschung ein, da der Laser-Abtaststrahl einen endlichen Durchmesser hat. Dieser liegt in der Größenordnung der kürzesten Pitlänge (3T).

In Seehausen, G., Influence of Pit Geometry on Read-Out Signals of Optical Data Disc Drives, Electronics Letters, Vol. 28 No. 18, August 1992, S. 1709-1711, IEEE International Publication, London, wird ein Berechnungsverfahren zur Simulation des Auslesesignals in Abhängigkeit der Pitform angegeben, auf dessen Algorithmen im weiteren zurückgegriffen wird. Demnach kann das Auslesesignal aus der Faltung des Abtaststrahls a(x,y) mit der Pitstruktur r(x,y) und anschließender Integration über die Detektorfläche gebildet werden:

$$SF = \iint\limits_{Detektor} |a(x,y) * r(x,y)|^2 \qquad (1)$$

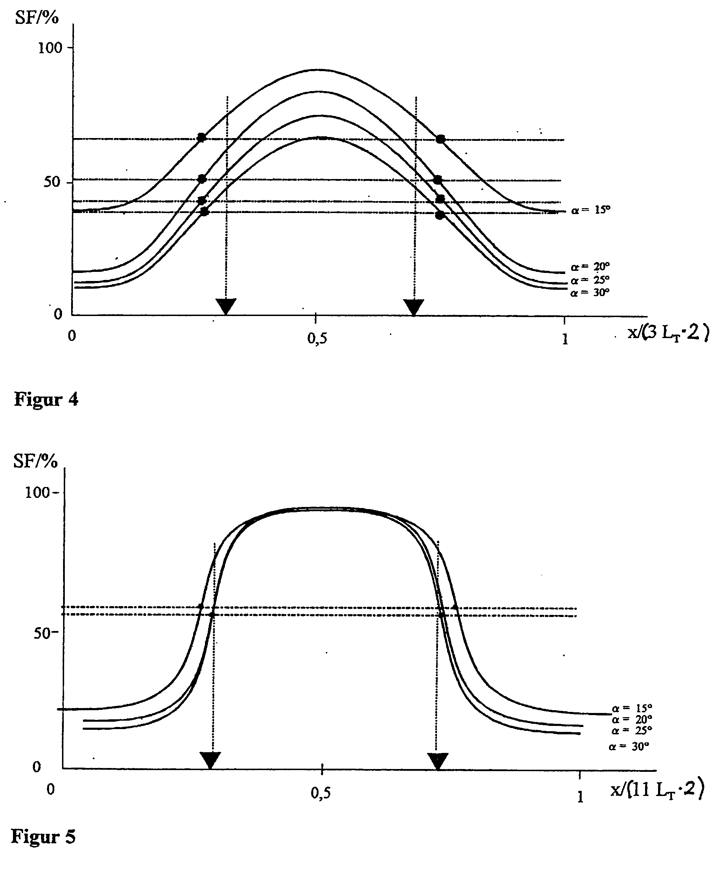

In Fig. 4 und Fig. 5 sind zwei Auslesesignale SF dargestellt, die sich auf unterschiedliche Pitlängen (3T, 11T) bei ansonsten gleichen Parametern beziehen. Die Signale sind als Funktion der Leserichtung für verschiedene Pitwinkel $\alpha$ wiedergegeben, wobei sich der optisch aktive Bereich (Land) zwischen den beiden Dreiecken befindet. Die Pit-Land-Struktur ist in beiden Fällen periodisch und wurde so gewählt, daß sich ein konstanter Gleichanteil in der Bitebene einstellt. Abweichend vom idealen Verhalten ergibt sich in der Signalebene ein nicht konstanter Signal-Gleichanteil SG (oder Mittelwert), der folgendermaßen definiert ist

$$SG = \frac{1}{X} \cdot \int\limits_0^x SF(x) \cdot dx \quad mit \quad X = Intergationsperiode \quad (2)$$

und der eine Abhängigkeit von den Pit- bzw. Land-Längen sowie den Pitwinkeln aufweist. Während bei 11T-langen Pits nur eine relativ geringe Auswirkung auf den Signal-Gleichanteil SG zu verzeichnen ist, macht sich bei 3T-langen Pits eine starke Anhebung des Signal-Gleichanteils SG bei abnehmenden Pitwinkeln $\alpha$ bemerkbar. Die Ursache hierfür liegt darin, daß die zunehmende Verflachung der Pitränder einer zunehmenden Pitverkürzung gleichkommt, die sich bei einer Pit-Land-Struktur mit kurzer Periodizität stärker auswirkt als bei einer Pit-Land-Struktur mit langer Periodizität. Aus Fig. 4 und Fig. 5 ist ersichtlich, daß bei der Identität zwischen Entscheidungsschwelle ES und Signal-Gleichanteil SG (ES=SG), wie sie sich bei dem bekannten Verfahren durch Wahl von DSV=0 ergibt, gerade für kleine Pitwinkel starke Fehler bei der Detektion der Pitränder bzw. Pit-längen mittels des Lesesignals SF entstehen. Zur Ermittlung der korrekten Pitlängen muß die Entscheidungsschwelle ES oberhalb des sich einstellenden Signal-Gleichanteils liegen.

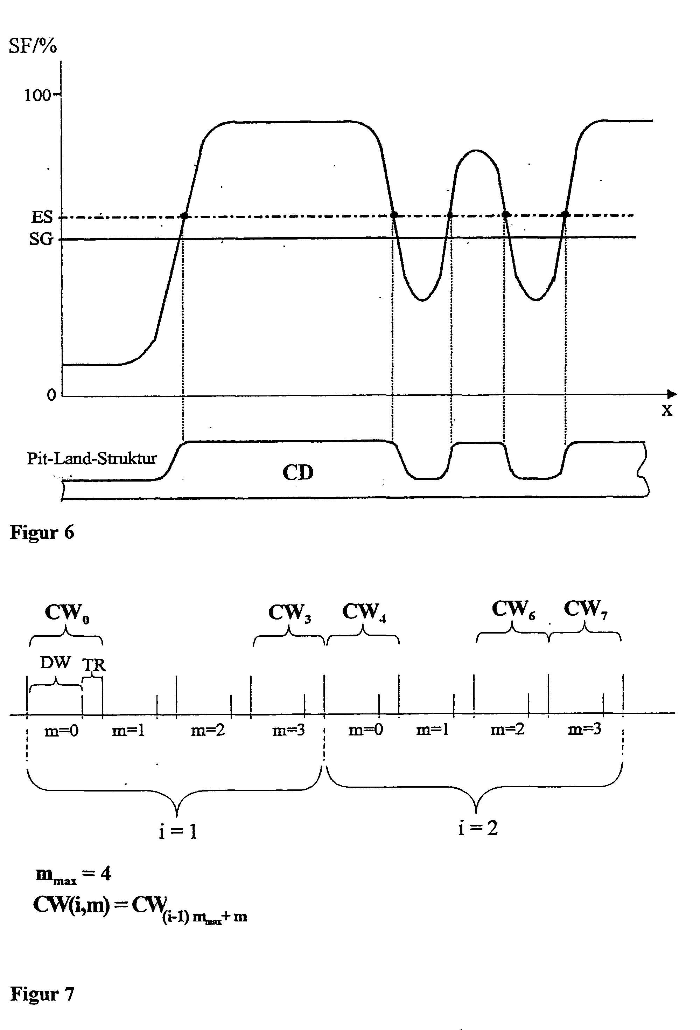

Auf einem realen Datenträger ist die Datenstruktur nicht periodisch, sondern statistisch verteilt. Fig. 6 zeigt den Verlauf des Lesesignals SF für die abgebildete unregelmäßige Pit-Land-Struktur. In diesem Fall resultiert der Signal-Gleichanteil SG für DSV=0 aus der Überlagerung der Gleichanteile aller auftretenden Signal-Komponenten für die unterschiedlichen Pit- bzw. Landlängen, wobei die Häufigkeit für das Auftreten der verschiedenen Längen zu berücksichtigen ist. Hierfür gilt der mathematische Zusammenhang

$$SG = \frac{\sum_{i=I_1}^{I_2} p(i) \int_0^{2iL_T} SF_i(x)dx}{L_T \sum_{i=I_1}^{I_2} 2 \cdot i \cdot p(i)} \tag{3}$$

wobei die verwendeten Abkürzungen die folgende Bedeutung haben:

| | |
|---|---|
| $I_1 L_T$: | Minimale auftretende Länge der Pits oder Lands |
| $I_2 L_T$: | Maximale auftretende Länge der Pits oder Lands |
| $L_T$: | Längenstufe |
| $p(i)$: | Wahrscheinlichkeitsdichte für das Auftreten der verschiedenen Längen i |
| $SF_i$: | Lesesignalverlauf bei der Pit-Land-Struktur der Länge $2i L_T$ |

Beispielsweise ist bei der Compact Disc $I_1=3$ und $I_2=11$, wobei die typischen Verteilungsdichten in Tabelle 1 dargestellt sind.

Tabelle 1:

| Verteilungsdichten der verschiedenen Pit- und Land-Längen auf der Compact Disc | |
|---|---|
| i | p(i) |
| 3 | 0,375 |
| 4 | 0,275 |
| 5 | 0,153 |
| 6 | 0,0875 |
| 7 | 0,05 |
| 8 | 0,0313 |
| 9 | 0,0188 |
| 10 | 0,0075 |
| 11 | 0,025 |

Wie aus Tab. 1 zu entnehmen ist, treten die kurzen Pits bzw. Lands erheblich häufiger auf als die langen Pits bzw. Lands. Weiterhin ist aufgrund des Faltungseffektes zwischen Pitstruktur und Lesestrahlgeometrie die Modulationsamplitude des Lesesignals SF bei kurzen Pits bzw. Lands kleiner als bei langen Pits bzw. Lands. Aufgrund dieser Tatsache beeinflussen die kurzen bis mittleren Pits den Signal-Gleichanteil SG am stärksten, wie an dem Beispiel aus Tab. 2 ersichtlich ist.

Tabelle 2:

| Beispiel für Abweichungen von Signal-Gleichanteil ΔSG und der Einzel-Signal-Gleichanteile ΔSG$_i$ für die verschiedenen Strukturlängen bei verrundeten Pits gegenüber der idealen rechteckförmigen Pitstruktur für DSV=0 | | | |
|---|---|---|---|
| i | Einzel-Signal-Gleichanteil ΔSG$_i$ | Modulations-amplitude /% | Signal-Gleichanteil ΔSG |
| 3 | 0,25 | 33 | |
| 4 | 0,25 | 43 | |
| 5 | 0,21 | 45 | |
| 6 | 0,18 | 45 | |
| 7 | 0,15 | 45 | |

Tabelle 2: (fortgesetzt)

| Beispiel für Abweichungen von Signal-Gleichanteil $\Delta SG$ und der Einzel-Signal-Gleichanteile $\Delta SG_i$ für die verschiedenen Strukturlängen bei verrundeten Pits gegenüber der idealen rechteckförmigen Pitstruktur für DSV=0 | | | |
|---|---|---|---|
| i | Einzel-Signal-Gleichanteil $\Delta SG_i$ | Modulations-amplitude /% | Signal-Gleichanteil $\Delta SG$ |
| 8 | 0,13 | 45 | |
| 9 | 0,12 | 45 | |
| 10 | 0,11 | 45 | |
| 11 | 0,10 | 45 | |
| | | | **0,2** |

Die Einzel-Signal-Gleichanteile $\Delta SG_i$ ergeben sich aus dem Lesesignal einer Folge von Pits und Lands gleicher Länge i $L_T$. Der Signal-Gleichanteil $\Delta SG$ resultiert aus der Überlagerung aller Einzel-Signal-Gleichanteile $\Delta SG_i$ unter der Berücksichtigung der Auftrittswahrscheinlichkeit.

Tab. 2 zeigt beispielhaft die absoluten Abweichungen von Signal-Gleichanteil SG und der Einzel-Signal-Gleichanteile $SG_i$ für verschiedene Strukturlängen i bei verrundeten Pits gegenüber der idealen rechteckförmigen Pitstruktur, wobei in der zugrundeliegenden Datenebene ein DSV=0 eingestellt wurde. Wie aus dem Zahlenbeispiel in Tab. 2 erkennbar ist, liegt der Signal-Gleichanteil SG bei 0,2, während die Einzel-Signal-Gleichanteile $SG_i$ für i=3 und i=4 mit 0,25 höher angesiedelt sind.

In Fig. 6 wird verdeutlicht, daß gerade bei den kurzen Pits die Entscheidungsschwelle ES zur korrekten Längenbestimmung nicht übereinstimmt mit dem Gleichanteil.

Die obige Untersuchung zeigt, daß bei dem bekannten Verfahren durch die Festlegung des digitalen Summenwerts DSV=0 ein Signal-Gleichanteil im Dekodierer oder CD-Lesegerät entsteht, der von dem idealen Wert abweicht, so daß die im Dekodierer ermittelte Enscheidungsschwelle nicht übereinstimmt mit dem (fälschlicherweise) angenommenen idealen Signal-Gleichanteil bei DSV=0.

Die obige Betrachtung zeigt darüberhinaus, daß gerade die am häufigsten auftretenden kürzeren Pitlängen (das heißt ununterbrochene Folgen von Nullen oder Einsen) mit größter Ungenauigkeit wiedergegeben werden. Dies führt aufgrund der geringen Modulationsamplitude der kürzeren Pits insbesondere in Anwesenheit von Oberflächenrauhigkeiten und produktionsbedingten Abformungsverlusten zu erhöhtem Jitter und damit zu einem Anstieg der Bitfehlerrate.

Man kann zwar dem Modulationsverlust der kürzeren Pits durch geeignete Filter begegnen, allerdings ist diese Maßnahme mit erhöhtem Rauschen ohne nennenswerte Veränderung des Signal-Gleichanteils verbunden.

Der Erfindung liegt die Aufgabe zugrunde, ein Verfahren zum Umkodieren von digitalen Informations-Datenwörtern der eingangs genannten Art anzugeben, bei dem die Bit- und damit die Datenfehlerrate im Vergleich zu dem bekannten Verfahren verringert ist.

Erfindungsgemäß wird diese Aufgabe durch folgende Merkmale gelöst:

a) Der einzustellende Signal-Gleichanteil wird in Abhängigkeit einer rechnerisch und/oder empirisch aufgefundenen optimalen Entscheidungsschwelle (EST) ermittelt; und
b) Die Auswahl des Kandidaten aus der Menge von Kandidaten für Kanaldatenwörter erfolgt anhand des Auswahlkriteriums, daß das gewählte Kanaldatenwort zu einem Signal-Gleichanteil in der Folge von Kanaldatenwörtern führt, der dem vom minimalen Signal-Gleichanteil verschiedenen, einzustellenden Signalanteil am nächsten kommt.

Im Gegensatz zu dem bekannten Verfahren, bei dem der minimale Signal-Gleichanteil angestrebt wird, geht die vorliegende Erfindung von der Erkenntnis aus, daß der minimale Gleichanteil in praktisch keinem Fall die optimale Entscheidungsschwelle im "Empfänger", das heißt im Dekodierer des Lesegeräts oder Abspielgeräts liefert, sondern daß die Entscheidungsschwelle einen vom minimalen Signal-Gleichanteil abweichenden Wert haben muß, wenn die kleinstmögliche Bitfehlerrate erzielt werden soll. Wie sich aus der obigen Betrachtung ergibt, liegt der einzustellende Signal-Gleichanteil und mithin die Entscheidungsschwelle im Abspielgerät anders als der minimale Signal-Gleichanteil.

Die Erfindung schlägt vor, bei der Umkodierung der Informations-Datenwörter in die zu speichernden oder zu übertragenden Kanaldatenwörter darauf zu achten, daß der digitale Summenwert so eingestellt wird, daß sich im Abspielgerät der günstigste Wert für die Entscheidungsschwelle ergibt. Die Erfindung nutzt dabei den Vorteil, daß im Abspielgerät, das heißt im Dekodierer, nur die Datenbits des Kanaldatenworts bezüglich der Information ausgewertet werden, nicht jedoch die redundanten Trennbits. Bei dem erfindungsgemäßen Verfahren ändert sich also für den Empfänger der Daten, das heißt im Fall der CD, für den Benutzer des CD-Abspielgeräts, praktisch nichts, nur daß er in den Genuß einer exakteren Informationswiedergabe kommt.

Zur Ausführung der Erfindung sind verschiedene spezielle Maßnahmen möglich. Eine Möglichkeit besteht grundsätzlich darin, zunächst eine Tabelle zusammenzustellen, in der abhängig von den jeweiligen Parametern (Pitwinkel etc.) eine Größe für die Beziehung zwischen optimaler Entscheidungsschwelle und Signal-Gleichanteil für einen digitalen Summenwert DSV=0 erstellt wird.

Der Signal-Gleichanteil für den Fall DSV=0 kann rein mathematisch mit den oben angegebenen Formeln oder meßtechnisch ermittelt werden. Die tatsächliche Entscheidungsschwelle EST kann durch Vermessung der Strukturlängen des Datenträgers (der CD) mittels Rasterelektronenmikroskop oder Tunnel-Rastermikroskop und Einstellung der Entscheidungsschwelle im Hinblick auf minimale Abweichung bezüglich der vermessenen Strukturlängen aufgefunden werden. Günstiger ist es möglicherweise, die optimale Entscheidungsschwelle mit Hilfe eines Referenzdatenträgers mit DSV=0 und bekannter Pitform auf meßtechnischem Wege zu ermitteln, indem man ein Referenz-Lesesystem verwendet und bei diesem die Entscheidungsschwelle so lange variiert, bis der minimale Jitter und die minimale Bitfehlerrate festgestellt sind. Dieser Wert wird dann als optimale Entscheidungsschwelle EST verwendet. Man erhält beispielsweise folgende Tabelle:

Tabelle 3:

| Zusammenhang zwischen Pitform und dem Verhältnis aus tatsächlicher Entscheidungsschwelle EST und Signal-Gleichanteil SG0 bei DSV=0; $A_{max}$ = maximale Amplitude der Amplituden A(i) der Lesesignalverläufe für unterschiedliche Strukturlängen. | |
|---|---|
| $\frac{EST-SGO}{A_{max}}$ | $\alpha$ |
| 0,09 | 15° |
| 0,06 | 20° |
| 0,05 | 25° |

In einer speziellen Ausgestaltung der Erfindung ist vorgesehen, daß die Differenz ermittelt wird zwischen

i) dem einzustellenden Signal-Gleichanteil und

ii) dem Signal-Gleichanteil für den minimalen digitalen Summenwert, d.i. der Wert der Summe von Nullen und Einsen entsprechend den beiden möglichen Signalpegeln, und daß eine Zuwachsrate für den digitalen Summenwert ermittelt wird gemäß der Formel:

$$ZW = -\left[1 + \frac{\sum_{i=I_1}^{I_2} i \cdot p(i) \cdot \left[1 + \frac{dx}{iL_T}\right]\left[\frac{SG_{1,0}(i) - EST}{A_{max}}\right]}{\left[\frac{EST - SG0}{A_{max}}\right] \cdot \sum_{i=I_1}^{I_2} i \cdot p(i)}\right]^{-1} \qquad (4)$$

$A_{max}$ ist hierbei die Maximale der Amplituden A(i) der Lesesignal-Verläufe für unterschiedliche Strukturlängen i $L_T$, denen die Auftrittswahrscheinlichkeitsdichten p(i) zugeordnet sind. Die Größe dx kennzeichnet die effektive Pitverkürzung. $SG_1(i)$ ist der Gleichanteil des Lesesignal-Verlaufs $SF_{i1}$, der einem optisch aktiven Bereich (1) der Länge $iL_T$ zugeordnet ist. $SG_0(i)$ ist der Gleichanteil des Lesesignal-Verlaufs $SF_{i0}$, der einem optisch inaktiven Bereich (0) der Länge $iL_T$ zugeordnet ist. In Gleichung (4) ist für positive Zuwachsraten $SG_1(i)$, für negative Zuwachsraten $SG_0(i)$ gemäß folgender Gleichungen einzusetzen:

$$SG_0(i) = \frac{1}{iL_T - dx} \int_0^{iL_T - dx} SF_{i0}(x)\,dx \qquad (5)$$

$$SG_1(i) = \frac{1}{iL_T + dx} \int_0^{iL_{T+dx}} SF_{i1}(x)dx \qquad (6)$$

Die Formel (4) kann für Differenzen (EST-SGO), die hinreichend klein gegenüber der maximal auftretenden Amplitude $A_{max}$ sind, vereinfacht werden, so daß sich unter dieser Voraussetzung ein für die Praxis einfacher zu verwendender linearer Zusammenhang zwischen Zuwachsrate und dem resultierenden relativen Gleichanteilanstieg einstellt:

$$ZW = \frac{-1}{K}\left[\frac{EST - SG0}{A_{max}}\right] \qquad (7)$$

mit

$$K = \frac{1}{A_{max}} \cdot \frac{\sum_{i=I_1}^{I_2} i \quad p(i)\left[1 + \frac{dx}{iL_T}\right](SG_{1,0}(i) - SG0)}{\sum_{i=I_1}^{I_2} i \quad p(i)} \qquad (8)$$

Wird einem Datenbit vom Wert "0" der Wert B=-1 und einem Datenbit vom Wert "1" der Wert B=I zugeordnet, so ist die Zuwachsrate in einem Datenstrom, der das NRZ-Format nach Figur 1 aufweist, folgendermaßen definiert:

$$ZW = \frac{\sum_{i=I}^{I} B(i)}{I} \qquad (9)$$

I legt hierbei das Zuwachsintervall in Bittakten fest.

In einer Ausführungsform der Erfindung ist vorgesehen, daß anhand der Zuwachsrate (ZW), die dem Signal-Gleichanteil der Folge von Kanaldatenwörtern entspricht, ein maximaler digitaler Summenwert innerhalb eines vorbestimmten Zuwachsintervalls festgelegt wird, und daß innerhalb jeweils eines Zuwachsintervalls die Kanaldaten für die Kanalwörter dadurch ermittelt werden, daß für die in Frage kommenden Kombinationen von Trennbits die digitalen Summenwerte der entsprechenden Kanaldatenwörter gebildet werden und daraus jeweils die Differenz bezüglich des maximalen Summenwerts gebildet wird. Das Auswahlkriterium für die Auswahl eines Kanaldatenwort-Kandidaten ist vorzugsweise die kleinste Differenz.

Um bei dem Verfahren die oben erwähnte d, k-Bedingung zu berücksichtigen, sieht die Erfindung vor, daß aus der Menge von Kandidaten solche Kandidaten unberücksichtigt bleiben, die im NRZI-Format nicht einer Bitfolge entsprechen, die zwischen zwei Bits "1" mindestens d und höchstens k Bits "0" aufweist.

In einer speziellen Ausgestaltung der Erfindung ist vorgesehen, daß der einzustellende Gleichanteil aus der Häufigkeitsverteilung der Längen aufeinanderfolgender Nullen oder Einsen errechnet wird. In die Berechnung können weitere Größen einfließen, namentlich die Lesesignalform und die effektive Pitlängenvariation.

Wie bereits erwähnt, treten kürzere Pit- bzw. Land-Längen häufiger auf als längere. Aus den einzelnen Pit- bzw. Land-Längen lassen sich einzelne zugehörige Signal-Gleichanteile errechnen. Berücksichtigt man dabei noch die Wahrscheinlichkeit des Auftretens für die entsprechenden Pit-Längen, so wird der einzustellende Gleichanteil beispielsweise so festgelegt, daß er einer Entscheidungsschwelle entspricht, die zwischen den Signal-Gleichanteilen für die am häufigsten auftretenden Pit-Längen liegt. Dies wird weiter unten noch näher erläutert.

Im folgenden wird ein Ausführungsbeispiel der Erfindung anhand der Zeichnung näher erläutert. Es zeigen:

Figur 1 eine beispielhafte Darstellung von Bitfolgen zum Erläutern der Formate NRZI und NRZ und eine Schaltung zur Formatumsetzung;

Figur 2 eine Folge von Informations-Datenwörtern und die aus einem einzelnen Informations-Datenwort gebildete Folge von Bits eines Kanaldatenworts, welches ein Datenwort DW und einen Trennbit-Block TR enthält, wobei außerdem der Signalverlauf für das 2-Pegel-Signal dargestellt ist;

Figur 3 eine Schnittdarstellung durch eine ideale bzw. eine reale Pitform der Tiefe u mit einem Pitwinkel a einer Compact Disc;

Figur 4 den Verlauf eines Lesesignals für eine Pit-Land-Struktur der Länge $2 \cdot 3 \, L_T$ für verschiedene Pitwinkel $\alpha$;

Figur 5 die Darstellung eines Lesesignals für eine Pit-Land-Struktur der Länge $2 \cdot 11 \, L_T$ bei verschiedenen Pitwinkeln $\alpha$;

Figur 6 den Verlauf eines Lesesignals SF, den Signal-Gleichanteil SG und die Entscheidungsschwelle ES gemäß der Erfindung;

Figur 7 einen Datenstrom aus Kanaldatenwörtern; und

Figur 8 ein Flußdiagramm für das Verfahren zum Auswählen von Kanaldatenwörtern mit der Maßgabe, daß innerhalb eines sich über eine bestimmte Anzahl von Kanaldatenwörtern erstreckendes Zuwachsintervall ein zur Erzielung des gewünschten Signal-Gleichanteils geeigneter Zuwachs des digitalen Summenwerts DSV eingestellt wird.

Als Ausführungsbeispiel soll das Verfahren zum Umwandeln von Information-Datenwörtern in Kanaldatenwörter bei der Herstellung einer Compact Disc (CD) erläutert werden, bei der ein Pitwinkel von $\alpha < 25°$ gemessen wurde, was einer effektiven Pitverkürzung dx in der Größenordnung von 100 nm entspricht. Gegenüber der idealen Pitform ergibt sich bei DSV=0 typischerweise eine relative Verschiebung des Signal-Gleichanteils $\Delta SG/A_{max} = 0{,}15$ gegenüber dem Signal-Gleichanteil bei idealer Pitform. Die typische Verschiebung der auf $A_{max}$ bezogenen Einzel-Gleichanteile $\Delta SG_i$ für die unterschiedlichen Strukturlängen i läßt sich der nachstehenden Tabelle 4 entnehmen:

Tabelle 4:

| Beispiel für Abweichungen von Signal-Gleichanteil $\Delta SG$ und der Einzel-Signal-Gleichanteile $\Delta SG_i$ für die verschiedenen Strukturlängen bei verrundeten Pits gegenüber der idealen rechteckförmigen Pitstruktur für DSV=0 | | |
|---|---|---|
| i | Einzel-Signal-Gleichanteil $\Delta SG_i/A_{max}$ | Signal-Gleichanteil $\Delta SG/A_{max}$ |
| 3 | 0,181 | |
| 4 | 0,176 | |
| 5 | 0,156 | |
| 6 | 0,131 | |
| 7 | 0,112 | |
| 8 | 0,098 | |
| 9 | 0,087 | |
| 10 | 0,078 | |
| 11 | 0,071 | |
| | | **0,15** |

Zur Minimierung von Lesefehlern muß die tatsächliche Entscheidungsschwelle und damit der resultierende Signal-Gleichanteil SGR an den Einzel-Gleichanteil $SG_i$ der kurzen Pits optimal angeglichen werden. In dem Beispiel der Tabelle 4 wird der resultierende Signal-Gleichanteil beispielsweise zwischen $SG_3$ und $SG_4$ gelegt, so daß die Verschiebung des resultierenden Signal-Gleichanteils der Einfachheit halber zu $\Delta SGR=(\Delta SG_3 + \Delta SG_4)/2=0,179\ A_{max}$ gewählt werden kann. Mit Hilfe der oben angegebenen Gleichungen ergibt sich ein Korrekturfaktor zu K=0,5.

Die relative Differenz zwischen $\Delta SGR$ und $\Delta SG$ ((0,179 - 0,15) $A_{max}$ = 0,029 $A_{max}$) entspricht der Größe (EST-SG0)/$A_{max}$ gemäß Tabelle 3 und gemäß Formel (4) errechnet sich ZW = - 0,058 (= - 1/17).

Innerhalb eines Datenworts, welches eine Länge von 17 Bits aufweist, muß also eine DSV-Zuwachsrate von -1 eingestellt werden. Hierzu werden die Bits des Trennbit-Blocks in jedem Kanalwort verwendet.

Die Einstellung der Zuwachsrate in einem Datenstrom soll anhand des in Tabelle 5 wiedergegebenen Datenblocks, der im CD-Standard der digitalen Null entspricht, erläutert werden.

| Datenworte DW im NRZI-Format | | | | | | | | | | | | | | Trennbits TR | | |
|---|---|---|---|---|---|---|---|---|---|---|---|---|---|---|---|---|
| 0 | 1 | 0 | 0 | 1 | 0 | 0 | 0 | 1 | 0 | 0 | 0 | 0 | 0 | x | x | x |
| 0 | 1 | 0 | 0 | 1 | 0 | 0 | 0 | 1 | 0 | 0 | 0 | 0 | 0 | x | x | x |
| 0 | 1 | 0 | 0 | 1 | 0 | 0 | 0 | 1 | 0 | 0 | 0 | 0 | 0 | x | x | x |
| 0 | 1 | 0 | 0 | 1 | 0 | 0 | 0 | 1 | 0 | 0 | 0 | 0 | 0 | x | x | x |
| . | . | . | . | . | . | . | . | . | . | . | . | . | . | . | . | . |
| . | . | . | . | . | . | . | . | . | . | . | . | . | . | . | . | . |

**Tabelle 5:** Datenblock aus identischen Datenworten im NRZI-Format

Der Datenblock, der sich beispielsweise aus identischen Datenworten zusammensetzt, sei unbegrenzt und liegt zunächst im NRZI-Ausgangsformat vor. Zur Übertragung wird der Datenblock um die Trennbits TR ergänzt und in das NRZ-Format umgewandelt. Für die Zuwachsrate ZW=0,058 ist das Ergebnis in Tab. 6 dargestellt, wobei die Wahl der Anfangs-Bit-Polarität beliebig sein kann. In Tab. 6 wurde beispielsweise mit Bit-Polarität 1 begonnen.

| Datenworte DW im NRZ-Format | | | | | | | | | | | | | | Trennbits TR | | | DSV | | | | |
|---|---|---|---|---|---|---|---|---|---|---|---|---|---|---|---|---|---|---|---|---|---|
| 1 | 0 | 0 | 0 | 1 | 1 | 1 | 1 | 0 | 0 | 0 | 0 | 0 | 0 | 1 | 1 | 1 | | | -1 | | |
| 1 | 0 | 0 | 0 | 1 | 1 | 1 | 1 | 0 | 0 | 0 | 0 | 0 | 0 | 1 | 1 | 1 | -1 | - | 1 | = | -2 |
| 1 | 0 | 0 | 0 | 1 | 1 | 1 | 1 | 0 | 0 | 0 | 0 | 0 | 0 | 1 | 1 | 1 | -2 | - | 1 | = | -3 |
| 1 | 0 | 0 | 0 | 1 | 1 | 1 | 1 | 0 | 0 | 0 | 0 | 0 | 0 | 1 | 1 | 1 | -3 | - | 1 | = | -4 |
| . | . | . | . | . | . | . | . | . | . | . | . | . | . | . | . | . | . | | . | | |
| . | . | . | . | . | . | . | . | . | . | . | . | . | . | . | . | . | | | . | | |

**Tabelle 6:** Datenblock im NRZ-Format mit Trennbits für eine Zuwachsrate

ZW= -0,058

Beim Herstellungsprozeß des Datenträgers ist dafür zu sorgen, daß die "1"-wertigen Bits in Tab. 6 den relativen Maxima im Lesesignal und die "0"-wertigen Bits den relativen Minima zugeordnet sind. Wird diese Zuordnung invertiert, so wird auch fälschlicherweise die Polarität des resultierenden Signal-Gleichanteils invertiert. Aufgrund der Regelmäßigkeit in dem Datenblock aus Tab. 6 ergibt sich ein Zuwachsintervall von $T_{ZW}$=17 Bittakten. Da der DSV pro Zuwachsintervall um -3+4-6+4=-1 (das sind die Bitfolgen zusammenhängender 1en und Oen) steigt, resultiert die geforderte Zuwachsrate von $1/T_{ZW}$= -1/17= -0,058.

Das obige Beispiel ist ein Spezialfall. Im allgemeinen Fall erstreckt sich das Zuwachsintervall über mehrere Wortlängen, also ein ganzzahliges Vielfaches von 17 Bittakten.

In dem Dekodierer (Abspielgerät) werden die empfangenen (abgetasteten) Kanalwörter dekodiert, wobei die Trennbits unberücksichtigt bleiben, was den Informationsgehalt angeht, sondern lediglich die eingangs angesprochenen Zwecke erfüllen. Die Entscheidungsschwelle wird durch Ermitteln des Signal-Gleichanteils gewonnen, was einer Aufintegration bei gleichzeitiger Division durch die Zeit entspricht. Um im Dekodierer nun die Entscheidungsschwelle, also den erfindungsgemäß gegenüber dem minimalen Gleichanteil veränderten Gleichanteil dauernd aufrecht zu erhalten, wird der digitale Summenwert DSV in den Kanaldatenwörtern laufend verändert, also erhöht oder vermindert, im dargestellten Beispiel erfolgt die Verminderung um "1" innerhalb jedes Kanaldatenworts.

Das Zuwachsintervall muß klein sein gegenüber den Zeitkonstanten des Lesesystems, um die Regelkreise des Lesesystems nicht zu beeinflussen. Im vorliegenden Beispiel entspricht das Zuwachsintervall einer Wortlänge des Kanaldatenworts.

Wie oben erwähnt, und wie aus der rechten Spalte in Tabelle 6 hervorgeht, nimmt der digitale Summenwert DSV in dem Datenstrom ständig ab, da in jedem Zuwachsintervall, im vorliegenden Beispiel also in jedem Kanaldatenwort, der digitale Summenwert um 1 vermindert wird. Bei dem Beispiel einer CD würde sich für den gesamten Datenstrom der Betrag des digitalen Summenwerts auf einen extrem hohen Wert aufsummieren. Aus praktischen Gründen wird also die Ermittlung der digitalen Summenwerte beschränkt auf endliche aneinandergrenzende Zuwachsintervalle, wozu eine Anzahl von Kanaldatenwörtern, $m_{max}$ gewählt wird. In der Praxis kann dieser Wert $m_{max}$ zum Beispiel bei 100 liegen, in dem weiter unten dargestellten Beispiel wird er aus Gründen der Übersichtlichkeit auf $m_{max}$=4 festgelegt. Der Wert $m_{max}$ entspricht also der Anzahl von Kanaldatenwörtern, die maximal für die Veränderung des digitalen Summenwerts DSV bis zum Erreichen von $DSV_{max}$ zur Verfügung steht. Dieser maximale digitale Summenwert der sowohl positiv - bei Erhöhung des Signal-Gleichanteils - als auch negativ - bei Erniedrigung des Signal-Gleichanteils - sein kann, steht mit dem Wert $m_{max}$ durch folgende Beziehung in Zusammenhang:

$$DSV_{max} = ZW \cdot T_{ZW} \cdot m_{max} \qquad (10)$$

In der Gleichung (10) ergibt das Produkt aus Zuwachsrate ZW und Zuwachsintervall $T_{ZW}$ im vorliegenden Beispiel den Wert -1, so daß der Betrag des maximalen digitalen Summenwerts $DSV_{max}$ der Anzahl der Kanaldatenwörter entspricht, die für die Veränderung bis zum Erreichen von $DSV_{max}$ zur Verfügung steht. Bei einer geringeren Zuwachsrate ZW und gleichem Zuwachsintervall (hier: 17 Bittakte) müßte $m_{max}$ bei gleichem Wert von $DSV_{max}$ erhöht werden.

Figur 7 zeigt den Anfang des Datenstroms, der aus Informations-Datenwörtern durch Einfügen von Trennbit-Blöcken erhalten wurde. Der Wert $m_{max}$ ist hier auf 4 festgelegt. Ein Kanaldatenwort CW besteht aus jeweils einem Datenwort mit 14 Bits und einem Trennbit-Block TR, der drei Bits enthält.

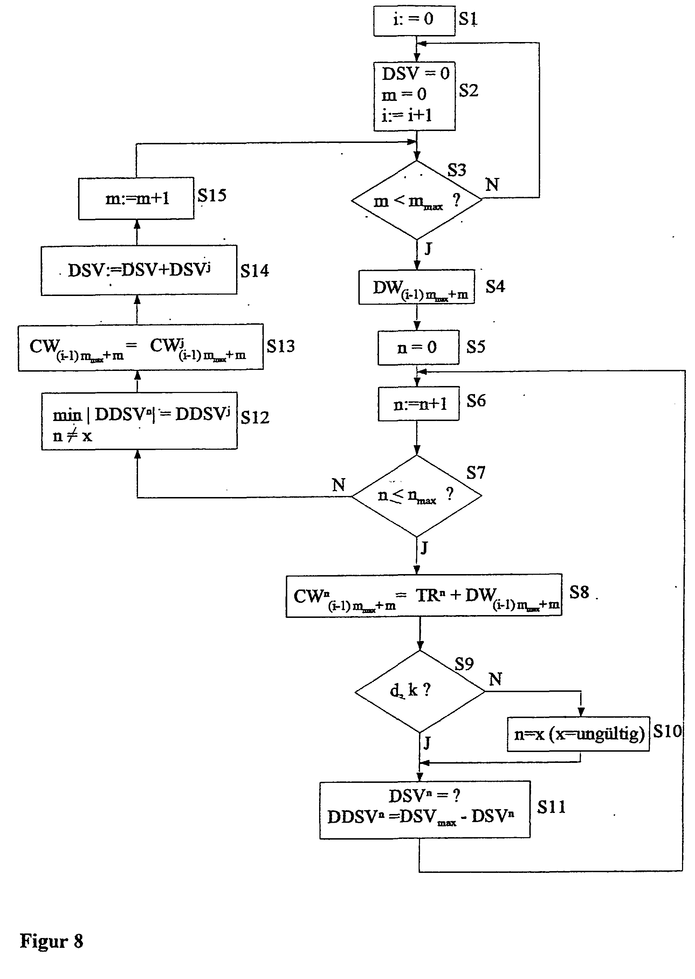

Für das im folgenden anhand der Figur 8 erläuterte Verfahren zum Einstellen des veränderten Signal-Gleichanteils wird der Indexzähler i eingeführt. Er wird nach jedem 4 Kanaldatenwörter umfassenden Abschnitt um 1 erhöht. Der Index m wird zyklisch von 0 auf 3 erhöht, da der maximale Wert für den Abschnitt von Kanaldatenwörtern bis zum Erreichen von $DSV_{max}$ hier auf 4 festgelegt wurde. Unten in Figur 7 ist der von i und m abhängige Index des jeweiligen Kanaldatenworts CW angegeben. Bei i=2 und m=2 ergibt sich nach dem angegebenen Index das Kanaldatenwort $CW_6$ ($4 \cdot 1 + 2$=6).

In dem in Figur 8 dargestellten Ablauf wird im Schritt S zunächst der in Figur 7 dargestellte Indexzähler i auf Null gesetzt.

Im Schritt S2 wird der digitale Summenwert DSV auf 0 gesetzt, und auch der zyklisch durchlaufende Wert von m innerhalb der maximalen Anzahl $m_{max}$ von zur Veränderung von DSV zur Verfügung stehenden Kanaldatenwörtern wird auf 0 gesetzt. Der Indexzähler i wird um 1 erhöht, also im ersten Durchlauf auf den Wert 1 gesetzt.

Bei Erreichen des Entscheidungsschritts S3 ist (wegen m=0) die Bedingung JA erfüllt.

Deshalb wird im Schritt S4 das dem angegebenen Index entsprechende Datenwort geholt, im vorliegenden Beispiel also das Datenwort $DW_0$, das erste Datenwort in dem hier betrachteten Datenstrom.

Im nachfolgenden Schritt S5 wird ein Indexzähler n auf 0 gesetzt. Der Indexzähler n wird in der nachfolgenden Schleife laufend um jeweils 1 erhöht bis auf den Wert n=7, da bei drei Trennbits insgesamt $n_{max}$=8 Bitkombinationen möglich sind.

Nach Erhöhung des Indexzählers n im Schritt S6 und der Entscheidung JA im Entscheidungsschritt S7 wird für den Wert n (beim ersten Durchlauf also n=0) das im Schritt S4 geholte Datenwort ergänzt, so daß sich ein Kanaldatenwort (mit 17 Bits) entsprechend dem durch i und m festgelegten Index ergibt.

In den Schritten S9 und S10 wird geprüft, ob das Kanaldatenwort, welches im Schritt S8 gebildet wurde, der d, k-Bedingung genügt. Diese Bedingung wurde oben erläutert. Die Schritte S9 und S10 sondern solche Kanaldatenwörter aus, die der d, k-Bedingung nicht genügen.

Im Schritt S11 wird der zu dem laufenden Index n gehörige digitale Summenwert abgefragt. Dieser digitale Summenwert hängt ab von dem Datenwort und dem diesem hinzugefügten Trennbit-Block entsprechend dem Schritt S8. Außerdem wird im Schritt S11 der Differenzwert $DDSV^n$ zwischen $DSV_{max}$ und dem zuvor ermittelten digitalen Summenwert $DSV^n$ ermittelt. Bei drei Trennbits wird diese Schleife mit den Schritten S6-S11 also achtmal durchlaufen, so daß aus dem Schritt S11 sich achtmal ein Differenzwert $DDSV^n$ ergibt.

Nach dem letzten Durchlauf erfolgt aus dem Schritt S7 ein Übergang zum Schritt S12. Hier wird der kleinste aufgefündene Differenzwert aus den vorausgehenden mehrmaligen Berechnungen entsprechend dem Schritt S11 ermittelt und mit Hilfe eines Index j wird im Schritt S13 das Kanalwort $CW^j$ von den 8 im Schritt S8 gebildeten Kanalwörtern ausgewählt, welches dem kleinsten Differenzwert entspricht. Dieses Kanalwort wird dann im Fall des vorliegenden Beispiels auf der Compact Disc erzeugt.

Im nachfolgenden Schritt S14 erfolgt die Erhöhung oder Akkumulation des laufenden digitalen Summenwerts DSV um den digitalen Summenwert, der der zuvor aufgefundenen kleinsten Differenz gemäß Schritt S 11 entspricht.

Mit anderen Worten: der im Schritt S14 hinzuaddierte Wert $DSV^j$ entspricht dem im Betrag maximalen gültigen ($n \neq x$) digitalen Summenwert, der in den letzten acht Durchläufen der Schleife der Schritte S6-S11 aufgeführt wurde.

Dann wird der Zähler m im Schritt S15 um 1 erhöht, ist der Zähler m noch kleiner als der Wert $m_{max}$ (im vorliegenden Beispiel kleiner als 4), so wird die Schleife mit den Schritten S3-S15 noch einmal durchlaufen, wobei die Schleife mit den Schritten S6-S11 (m=8)-mal durchlaufen wird. Schließlich ist man bei dem Wert $m_{max}$ angelangt, in Figur 7 also bei dem Kanaldatenwort $CW_3$. Dies führt durch die Antwort NEIN im Schritt S3 den Ablauf erneut zum Schritt S2, in welchem der Indexzähler i um 1 erhöht wird, was einem Übergang zu den rechts in Figur 7 dargestellten Kanaldatenwörtern $CW_4$ bis $CW_7$ entsprechend dem Indexzähler i=2 entspricht.

Wie aus dem oben beschriebenen Ablauf des Prozesses zum Einstellen des veränderten Signal-Gleichanteils hervorgeht, kann es zum Beispiel vorkommen, daß beim erstmaligen Festlegen eines Kanaldatenworts im Schritt S13 ein Kanaldatenwort ausgewählt wird, welches einem sehr großen digitalen Summenwert entspricht, der im Schritt S 11 ermittelt wurde. Wenn der Wert $DSV^n$ im Schritt S11 nahezu so groß ist wie der Schritt $DSV_{max}$, so ergibt sich eine entsprechend kleine Differenz $DDSV^n$. Der im Schritt S14 dann durch Aufsummierung erhaltene Wert DSV liegt dann in der Nähe des Werts $DSV_{max}$, so daß die nachfolgend ausgewählten Kanalworte nur einen geringen Zuwachs des digitalen Summenwerts aufweist.

Wie bereits eingangs erläutert, ist das hier vorgestellte Verfahren zum Festlegen einer Entscheidungsschwelle bei der Übertragung oder Zwischenspeicherung von digitalen Informations-Datenwörtern grundsätzlich bei sämtlichen Speicher- und Übertragungsverfahren anwendbar, wenn bei diesen Verfahren nachweisbar ist, daß die optimale Entscheidungsschwelle abweicht von derjenigen Entscheidungsschwelle, die dem minimalen Signal-Gleichanteil entspricht.

Ein wesentlicher Vorteil des beschriebenen Verfahrens ist es, daß das Auslesesystem in seinem Aufbau nicht verändert werden muß, da die Trennbits bei der Datenauswertung eliminiert werden und somit, bis auf die gewünschte Verschiebung des Signal-Gleichanteils, keine Auswirkung auf die weitere Datenverarbeitung im Gerät haben.

Das Verfahren ist nicht auf den beschriebenen Fall der Compact Disc beschränkt, sondern kann auf äquivalente Datenträger, die die Einstellung einer Zuwachsrate im DSV erlauben, angewendet werden.

So sind zum Beispiel Aufzeichnungssysteme wie Digital Versatile Disc (DVD) bekannt, bei denen jedem $n_1$-Bit langem Informations-Datenwort eine bestimmte Anzahl unterschiedlicher $n_2$-Bit langer Kanaldatenworte, die in ihrer Bedeutung gleichwertig sind und die geforderten Kanalbedingungen erfüllen, zugeordnet werden können. Das heißt, der Kodierer kann eine Auswahl aus den möglichen Kanaldatenworten so treffen, daß eine geforderte Zuwachsrate einstellbar ist. Der Ablauf zur Einstellung der Zuwachsrate bei einem derartigen System ist dem in Figur 8 dargestellten Aufbau äquivalent. Im Auslesesystem wird dann jedem Kanaldatenwort aus der bestimmten Anzahl von unterschiedlichen, gleichbedeutenden, $n_2$-Bit langen Kanaldatenwörtern wieder ein einziges Informations-Datenwort zugeordnet.

**Patentansprüche**

**1.** Verfahren zum Umkodieren von digitalen Informations-Datenwörtern in Kanaldatenwörter (CW) durch Anfügen eines Blocks (TR) aus einer Menge von Trennbit-Blöcken an je ein vorausgehendes Informationsdatenwort oder durch Abbilden eines Informations-Datenworts auf eines aus einer Teilmenge von Kanaldatenwörtern, um einen bestimmten Signal-Gleichanteil einzustellen, wozu eine Menge von Kandidaten für Kanaldatenwörter gebildet wird, aus der ein Kanaldatenwort gemäß einem Auswahlkriterium ausgewählt wird, **gekennzeichnet durch** folgende Merkmale:

a) der einzustellende Signal-Gleichanteil wird in Abhängigkeit einer rechnerisch und/oder empirisch aufgefündenen optimalen, d. h. im Verlauf der Dekodierung der Kanaldatenwörter zu möglichst wenigen Bitfehlern bei der Unterscheidung von "0" und "1" führenden, Entscheidungsschwelle (EST) ermittelt; und

b) die Auswahl des Kandidaten erfolgt anhand des Auswahlkriteriums, daß das ausgewählte Kanaldatenwort zu einem Signal-Gleichanteil in der Folge von Kanaldatenwörtern führt, die dem vom minimalen Signal-Gleichanteil verschiedenen, einzustellenden Signal-Gleichanteil am nächsten kommt.

2. Verfahren nach Anspruch 1, **dadurch gekennzeichnet,** daß die Differenz ermittelt wird zwischen

i) dem einzustellenden Signal-Gleichanteil und

ii) dem Signal-Gleichanteil (SG0) für den minimalen digitalen Summenwert, d.i. der Wert der Summe von Nullen und Einsen entsprechend den beiden möglichen Signalpegeln, und

daß eine Zuwachsrate (ZW) für den digitalen Summenwert (DSV) gemäß der Formel

$$ZW = -K^{-1} (EST\text{-}SG0)/A_{max}$$

ermittelt wird, wobei 1/K ein Proportionalitätsfaktor ist, der von der Auftrittswahrscheinlichkeit der unterschiedlich langen Signal-Teilverläufe abhängt, und $A_{max}$ die maximale der Amplituden der Signalverläufe ist, die bei der Dekodierung entstehen.

3. Verfahren nach Anspruch 2, **dadurch gekennzeichnet,** daß anhand der Zuwachsrate (ZW) des dem digitalen Summenwert entsprechenden Signal-Gleichanteils der Folge von Kanaldatenwörtern (CW) ein betragsmäßig maximaler Summenwert ($DSV_{max}$) innerhalb einer vorbestimmten Zuwachs-Spanne ($m_{max}$) festgelegt wird, und daß innerhalb jeweils einer Zuwachs-Spanne die Kandidaten für die Kanalwörter dadurch ermittelt werden, daß für die in Frage kommenden Kombinationen von Trennbits die digitalen Summenwerte der entsprechenden Signaldatenwörter und daraus jeweils die Differenz (DDSV) bezüglich des maximalen Summenwerts ($DSV_{max}$) gebildet wird.

4. Verfahren nach Anspruch 3, **dadurch gekennzeichnet,** daß das Auswahlkriterium für den Kandidaten die kleinste Differenz ist.

5. Verfahren nach einem der Ansprüche 1 bis 4, **dadurch gekennzeichnet,** daß aus der Menge von Kandidaten solche Kandidaten unberücksichtigt bleiben, die im NRZI-Format nicht einer Bitfolge entsprechen, die zwischen zwei Bits "1" mindestens d und höchstens k Bit "0" aufweist (d, k-Bedingung).

6. Verfahren nach einem der Ansprüche 2 bis 5, **dadurch gekennzeichnet,** daß der einzustellende Gleichanteil (EST) aus der Häufigkeitsverteilung der Längen aufeinanderfolgender Nullen oder Einsen errechnet wird.

7. Aufzeichnungsträger mit einer Informationsstruktur aus Folgen von Kanalbitzellen, die die gemäß dem Verfahren nach einem der Ansprüche 1 bis 6 gebildeten Kanaldatenwörter (CW) darstellen, und die je ein Bit enthalten, dessen Wert "0" oder "1" durch Abtasten der Kanalbitzellen in einem Wiedergabegerät dadurch ermittelt wird, daß aus den Pegeln des Abtastsignals der Signal-Gleichanteil ermittelt und mit Hilfe dieses Signal-Gleichanteils das Vorhandensein oder das Fehlen von Pegelübergängen am Anfang der Bitzellen festgestellt wird, wobei die Folgen der Kanalbitzellen für Bits mit dem Wert "0" und "1" derart strukturiert sind, daß der Signal-Gleichanteil von dem kleinsten möglichen Signal-Gleichanteil abweicht.

8. Vorrichtung zum Umkodieren von digitalen Informations-Datenwörtern in Kanaldatenwörter gemäß Verfahren nach einem der Ansprüche 1 bis 6, mit einer Einrichtung, die aus den möglichen Kandidaten für ein Kanaldatenwort jeweils denjenigen Kandidaten auswählt, durch den der sich beim Wiedergeben der Folge von Kanaldatenwörtern einstellende Signal-Gleichanteil von dem kleinsten möglichen Signal-Gleichanteil abweicht.

9. Wandler zum Umwandeln eines aufzuzeichnenden Analogsignals in die Folge von Kanaldatenwörter mit der Vorrichtung nach Anspruch 8.

**Claims**

1. A method for translating digital information data words into channel data words *(CW)* by annexing a block *(TR)* from a set of merge bit blocks to a previous information data word or by mapping an information data word onto one channel data word from a subset thereof, in order to adjust a certain signal direct component, for which purpose a set of candidates for channel data words is formed from which a channel data word is selected according to a selection criterion,
   characterized by the following features:

   a) the signal direct component to be adjusted is determined in accordance with a mathematically and/or empirically found decision threshold *(EST)* which is optimum in the sense that it leads to as few bit errors in distinguishing "0" and "1" as possible in the course of the decoding of the channel data words; and
   b) the candidate is selected using the selection criterion that the selected channel data word leads to a signal direct component in the sequence of channel data words which comes closest to the signal direct component to be adjusted which is different from the minimum signal direct component.

2. The method of claim 1, characterized in that the difference is determined between

   i) the signal direct component to be adjusted and
   ii) the signal direct component *(SG0)* for the minimum digital sum value, i.e. the value of the sum of zeros and ones in accordance with the two possible signal levels, and

   an increment rate *(ZW)* for the digital sum value *(DSV)* is determined according to the formula

$$ZW = -K^{-1} \ (EST\text{-}SG0)/A_{max}$$

   where *1/K* is a proportionality factor which depends on the probability of occurrence of the partial signal courses of different lengths, and $A_{max}$ is the maximum of the amplitudes of the signal courses which arise during decoding.

3. The method of claim 2, characterized in that a quantitatively maximum sum value *($DSV_{max}$)* within a predetermined increment span *($m_{max}$)* is fixed with reference to the increment rate *(ZW)* of the signal direct component, corresponding to the digital sum value, of the sequence of channel data words *(CW),* and the candidates for the channel words are determined within an increment span by forming the digital sum values of the corresponding signal data words for the combinations of merge bits in question and therefrom the difference *(DDSV)* with respect to the maximum sum value *($DSV_{max}$).*

4. The method of claim 3, characterized in that the selection criterion for the candidate is the smallest difference.

5. The method of any of claims 1 to 4, characterized in that those candidates from the set of candidates are left out of account which in the NRZI format do not correspond to a bit sequence which has at least *d* and at most *k* "0" bits between two "1" bits *(d, k* condition).

6. The method of any of claims 2 to 5, characterized in that the direct component *(EST)* to be adjusted is calculated from the frequency distribution of the lengths of consecutive zeros or ones.

7. A recording medium with an information structure consisting of sequences of channel bit cells representing the channel data words *(CW)* formed by the method of any of claims 1 to 6 and each containing one bit whose value "0" or "1" is determined, by scanning the channel bit cells in a playback system, by determining the signal direct component from the levels of the scanning signal and ascertaining the presence or absence of level transitions at the beginnings of the bit cells with the aid of said signal direct component, the sequences of channel bit cells for bits with the value "0" and "1" being structured such that the signal direct component deviates from the smallest possible signal direct component.

8. An apparatus for translating digital information data words into channel data words according to the method of any of claims 1 to 6, having a device for selecting from the possible candidates for a channel data word that candidate by which the signal direct component occurring upon playback of the sequence of channel data words deviates from the small possible signal direct component.

9. A converter for converting an analog signal to be recorded into the sequence of channel data words with the apparatus of claim 8.

**Revendications**

1. Procédé de conversion de mots de données d'information numérique en mots de données de canaux (CW) par adjonction d'un bloc (TR), parmi une quantité de blocs de bits de séparation, à chaque mot de données d'information antéposé ou par reproduction d'un mot de donnée d'information sur l'un parmi une quantité de mots de données de canaux, afin de régler une partie continue de signal définie, une quantité de candidats aux mots de données de canaux étant formés, parmi laquelle un mot de donnée de canal est sélectionné selon un critère de sélection,
caractérisé par les particularités suivantes :

   a) la partie continue du signal à régler est déterminée en fonction d'un seuil de décision (EST) optimal, établi par le calcul et/ou de manière empirique c'est-à-dire au cours du décodage des mots de données de canaux, et conduisant à aussi peu d'erreurs de bits que possible dans la distinction entre "0" et "1" ; et
   b) la sélection du candidat s'opère à l'aide du critère de sélection, de manière à ce que le mot de donnée de canal sélectionné conduise à une partie continue de signal dans la suite des mots de données de canaux, qui soit la plus proche de la partie continue de signal à régler, différente de la partie continue du signal la plus petite.

2. Procédé selon la revendication 1, caractérisé en ce que la différence est calculée entre

   i) la partie continue du signal à régler et
   ii) la partie continue du signal (SG0) pour la valeur de totalisation numérique la plus petite, c'est-à-dire la valeur de totalisation des zéros et des uns, en fonction des deux niveaux de signaux possibles, et

de manière à ce qu'un taux de croissance (ZW) soit calculé pour la valeur de totalisation numérique (DSV) conformément à la formule

$$ZW = -K^{-1} (EST-SG0)/A_{max}$$

où $1/K$ est un facteur de proportionnalité, qui dépend de la probabilité d'occurrence des courbes partielles de signaux de longueurs diverses, et $A_{max}$ représente la plus grande des amplitudes des courbes de signaux, qui se produisent lors du décodage.

3. Procédé selon la revendication 2, caractérisé en ce qu'une valeur de totalisation maximale ($DSV_{max}$) est définie à l'intérieur d'une plage de croissance ($m_{max}$) prédéfinie, à l'aide du taux de croissance (ZW) de la partie continue du signal de la suite de mots de données de canaux (CW), qui correspond à la valeur de totalisation numérique, et en ce que, à l'intérieur de chaque fois une plage de croissance, les candidats aux mots de canaux sont calculés par le fait que les valeurs numériques de totalisation des mots de données de signaux correspondants sont formées pour les combinaisons de bits de séparation concernées et à partir de là, chaque fois, la différences (DDSV) par rapport à la valeur de totalisation maximale ($DSV_{max}$).

4. Procédé selon la revendication 3, caractérisé en ce que le critère de sélection du candidat est la différence la plus petite.

5. Procédé selon l'une des revendications 1 à 4, caractérisé en ce que, parmi la quantité de candidats, les candidats qui ne correspondent pas à une suite de bits au format NRZI comprenant, entre deux bits "1", au moins d et au plus k bits "0" (condition d, k), ne sont pas pris en considération.

6. Procédé selon l'une des revendications 2 à 5, caractérisé en ce que la partie continue du signal à régler (EST) est calculée à partir de la répartition de fréquence des longueurs de zéros ou de uns successifs.

7. Supports d'enregistrement comportant une structure d'information constituée de suites de cellules de bits de canaux qui, conformément au procédé selon l'une des revendications 2 à 6, représentent les mots de données de canaux (CW) et qui contiennent chacune un bit, dont la valeur "0" ou "1" est calculée par balayage des cellules

**14**

de bits de canaux, dans un appareil de restitution, par le fait que la partie continue du signal est calculée à partir des niveaux du signal de balayage, et par le fait qu'à l'aide de cette partie continue du signal, on constate la présence ou l'absence de transitions de niveaux au début des cellules de bits, les suites des cellules de bits de canaux destinées aux bits de valeur "0" ou "1" étant structurées de manière telle que la partie continue du signal diffère de la partie continue du signal la plus petite possible.

8. Dispositif de conversion de mots de données d'information numériques en mots de données de canaux, conformément au procédé selon l'une des revendications 1 à 6, comportant un système qui sélectionne parmi les candidats possibles à un mot de donnée de canal, chaque fois le candidat par lequel la partie continue du signal se réglant lors de la restitution de la suite de mots de données de canaux, diffère de la partie continue du signal la plus petite possible.

9. Convertisseur destiné à convertir un signal analogique à enregistrer dans la suite de mots de données de canaux, à l'aide du dispositif selon la revendication 8.

**NRZI** 0 0 0 0 1 0 0 1 0 0 0 1 0 0 0 0 0 0 1 0 0 1 0 0

**NRZ** 0 0 0 0 1 1 1 0 0 0 0 1 1 1 1 1 1 1 0 0 0 1 1 1

NRZI ⟶ [⊕] ⟶ NRZ           (+) = Exklusiv-Oder

**Figur 1**

| 7 | 8 | 1 | 2 | 3 | 4 | 5 | 6 | 7 | 8 | 1 | 2 | 3 | 4 | 5 | 6 | 7 | 8 | 1 | 2 | 3 | 4 | 5 | 6 |
|---|---|---|---|---|---|---|---|---|---|---|---|---|---|---|---|---|---|---|---|---|---|---|---|
| 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |

$IW_{i-1}$          $IW_i$

$DW_i$          $TR_i$

**NRZI** | 0 | 0 | 0 | 0 | 1 | 0 | 0 | 1 | 0 | 0 | 0 | 1 | 0 | 0 | 0 | 0 | 0 | 0 | 0 | 1 | 0 | 0 | 1 | 0 | 0 |

**SF**

**NRZ** | 0 | 0 | 0 | 0 | 1 | 1 | 1 | 0 | 0 | 0 | 0 | 1 | 1 | 1 | 1 | 1 | 1 | 1 | 0 | 0 | 0 | 1 | 1 | 1 |

**Figur 2**

Figur 3

SF/%

x/(3 L$_T$·2)

**Figur 4**

SF/%

x/(11 L$_T$·2)

**Figur 5**

SF/%

100

ES

SG

0

x

Pit-Land-Struktur

CD

**Figur 6**

$CW_0$    $CW_3$  $CW_4$    $CW_6$  $CW_7$

DW  TR

m=0    m=1    m=2    m=3    m=0    m=1    m=2    m=3

i = 1    i = 2

$m_{max} = 4$

$CW(i,m) = CW_{(i-1) m_{max}+m}$

**Figur 7**

$$i := 0 \quad \text{S1}$$

$$\begin{array}{l} DSV = 0 \\ m = 0 \\ i := i+1 \end{array} \quad \text{S2}$$

S3 — $m < m_{max}$ ? — N

J

$$DW_{(i-1)m_{max}+m} \quad \text{S4}$$

$$n = 0 \quad \text{S5}$$

$$n := n+1 \quad \text{S6}$$

S7 — $n \leq n_{max}$ ? — N

J

$$CW^n_{(i-1)m_{max}+m} = TR^n + DW_{(i-1)m_{max}+m} \quad \text{S8}$$

S9 — $d, k$ ? — N

$$n = x \ (x = \text{ungültig}) \quad \text{S10}$$

J

$$\begin{array}{l} DSV^n = ? \\ DDSV^n = DSV_{max} - DSV^n \end{array} \quad \text{S11}$$

$$m := m+1 \quad \text{S15}$$

$$DSV := DSV + DSV^j \quad \text{S14}$$

$$CW_{(i-1)m_{max}+m} = CW^j_{(i-1)m_{max}+m} \quad \text{S13}$$

$$\begin{array}{l} \min | DDSV^n | = DDSV^j \\ n \neq x \end{array} \quad \text{S12}$$

**Figur 8**

20